# EUROPEAN PATENT APPLICATION

(11) **EP 1 533 958 A1**
(43) Date of publication of application: **25.05.2005**
(21) Application number: 02747713.2
(22) Date of filing: 22.07.2002
(51) Int. Cl.: H04L 12/58

(54) **ELECTRONIC MAIL SERVER; ELECTRONIC MAIL DELIVERY RELAYING METHOD; AND COMPUTER PROGRAM**

(71) Applicant: FUJITSU LIMITED, Kawasaki-shi, Kanagawa 211-8588 (JP); Fujitsu Peripherals Limited, Kato-gun, Hyogo 673-1447 (JP)
(72) Inventor: HASEGAWA, Tadashi c/o FUJITSU PERIPHERALS LIMITED, Kato-gun, Hyogo 673-1447 (JP)
(74) Representative: Sunderland, James Harry
(86) International application number: PCT/JP2002/007402
(87) International publication number: WO 2004/010662

(57) **Abstract**

An electronic mail server includes an unsolicited site database for storing a part or a whole of a URL of a Web site that delivers undesired information to a user, a mail reception portion for receiving electronic mail sent by a terminal device of a delivering trader of direct mail, an unsolicited bulk electronic mail decision portion for deciding whether or not the received electronic mail contains a part or a whole of the URL stored in the unsolicited site database, and a mail transmission portion for sending the electronic mail to a terminal device of the user only when it is decided that the received electronic mail does not contain a part or a whole of the URL.

## Description

### TECHNICAL FIELD

The present invention relates to an electronic mail server that performs a process for preventing unsolicited electronic mail from being sent to a terminal device of a user.

### BACKGROUND ART

A delivery of direct mail by electronic mail has following merits for a trader. First, compared with a delivery by mail or a delivery service, it requires a low cost for delivery and little manpower for delivering to a lot of users. In addition, the trader can enter a URL of a Web page of his or her Web site in the electronic mail so that interested users can access the trader's Web site. Thus, the trader can make the electronic mail readily without any special consideration about a design or a layout of the electronic mail. Because of these merits, a lot of traders deliver direct mail by electronic mail.

However, in many cases receiving such electronic mail is inconvenience to a user. A user may be required to make time to read the electronic mail and to decide whether it is necessary electronic mail or not. In some cases the user has to access a Web site in accordance with a URL included in the electronic mail for deciding whether it is necessary electronic mail or not. In addition, there is a case where the contents of the electronic mail are unpleasant to the user. Furthermore, a user of a cellular phone may have to pay for a communication charge every time when receiving electronic mail. In this case the communication charge increases.

There is proposed a method of refusing to receive electronic mail from a specific trader designated by the user. For example, a user registers an electronic mail address or a domain name of the trader who has sent direct mail many times to the user in an electronic mail server of an Internet service provider. The electronic mail server filters electronic mail to the user to extract electronic mail sent from the trader. Then, the electronic mail server regards the extracted electronic mail as unsolicited bulk electronic mail, which is removed without sending them to a terminal device of the user.

However, an increasing number of traders deliver such unsolicited bulk electronic mail by falsifying the electronic mail address of sender. Such traders think it is sufficient to inform users of the URL of his or her Web page. As a result, even if the user registers the electronic mail address of the trader in the electronic mail server, such unsolicited bulk electronic mail can pass the filter and are delivered to the terminal device of the user.

An object of the present invention is to provide an electronic mail server and a method that enables a user to refuse to receive unsolicited bulk electronic mail regardless of an electronic mail address of a sender.

### DISCLOSURE OF THE INVENTION

An electronic mail server according to the present invention, which is an electronic mail server for relaying electronic mail, includes an unsolicited URL storage portion for storing a part or a whole of a URL of a Web site that delivers undesired information for a receiver of electronic mail; a reception portion for receiving electronic mail sent from a terminal device of a sender; a decision portion for deciding whether or not the received electronic mail contains a part or a whole of the URL stored in the unsolicited URL storage portion; and a transmission portion for sending the received electronic mail to a terminal device of a destination address of the received electronic mail only when it is decided that the received electronic mail does not contain a part or a whole of the URL.

Preferably, the electronic mail server includes a URL rule storage portion for storing URL rule information that indicates a relationship between a domain name of a domain when determining a URL and a site name of a Web site that is provided to each domain; a first reception portion for receiving unsolicited bulk electronic mail from a terminal device of a user, the electronic mail being unsolicited electronic mail to the user who received the electronic mail; a domain extraction portion for extracting a domain name indicated in a URL contained in the received unsolicited bulk electronic mail; a Web site specifying portion for specifying a Web site that delivers a Web page indicated in the URL contained in the received unsolicited bulk electronic mail by referring to the URL rule information based on the extracted domain name; an unsolicited site storage portion for storing the extracted domain name and a site name of the specified Web site as unsolicited site information in connection with the user; a second reception portion for receiving electronic mail sent from a terminal device of a sender; an unsolicited bulk electronic mail decision portion for deciding whether or not the received electronic mail is unsolicited bulk electronic mail by deciding whether the URL contained in the received electronic mail contains a domain name and a site name indicated in the unsolicited site information of the user of the destination address of the received electronic mail; and a transmission portion for sending the received electronic mail to a terminal device of a user of the destination address only when it is decided that the received electronic mail is not unsolicited bulk electronic mail.

Alternatively, the electronic mail server further includes a first Web page obtaining portion for obtaining a Web page indicated in a URL contained in the unsolicited bulk electronic mail received by the first reception portion. If the Web page obtained by the first Web page obtaining portion contains a code for jumping to other Web page automatically, the domain extraction portion extracts a domain name of a domain in which the other Web page is provided, the Web site specifying portion specifies a Web site that delivers the other Web page, and the unsolicited site storage portion stores a domain name of a domain in which a Web site is provided for delivering the other Web page and a site name of the Web site as the unsolicited site information.

Alternatively, the electronic mail server further includes a second Web page obtaining portion for obtaining a Web page indicated in a URL contained in the electronic mail received by the second reception portion. If the Web page obtained by the second Web page obtaining portion contains a code for jumping to other Web page automatically, the unsolicited bulk electronic mail decision portion decides whether or not the electronic mail is unsolicited bulk electronic mail in accordance with a URL of the other Web page.

A method for relaying electronic mail according to the present invention includes the steps of storing a part or a whole of a URL of a Web site that delivers undesired information by electronic mail to a receiver; receiving electronic mail sent from a terminal device of a sender; deciding whether or not the received electronic mail contains a part or a whole of the stored URL; and sending the received electronic mail to a terminal device of a destination address of the received electronic mail only when it is decided that the received electronic mail does not contain a part or a whole of the URL.

### BRIEF DESCRIPTION OF THE DRAWINGS

Fig. 1 shows an example of a structure of an electronic mail system including an electronic mail server according to the present invention.
Fig. 2 is a table for explaining an example of a pattern of a rule of URL.
Fig. 3 shows an example of a hardware structure of the electronic mail server.
Fig. 4 shows an example of a functional structure of the electronic mail server.
Fig. 5 shows an example of a structure of a URL rule database.
Fig. 6 shows an example of a structure of an unsolicited site database.
Figs. 7(a) and 7(b) show examples of electronic mail sent from a delivering trader to a user.
Fig. 8 is a diagram for explaining an example of a general rule of URL.
Figs. 9(a) and 9(b) show a mechanism of a redirect function of a Web page.
Fig. 10 shows an example of an HTML file including a redirect code.
Fig. 11 is a flowchart for explaining a flow of process for relaying electronic mail.
Fig. 12 is a flowchart for explaining a flow of process for registering an unsolicited site.

### BEST MODE FOR CARRYING OUT THE INVENTION

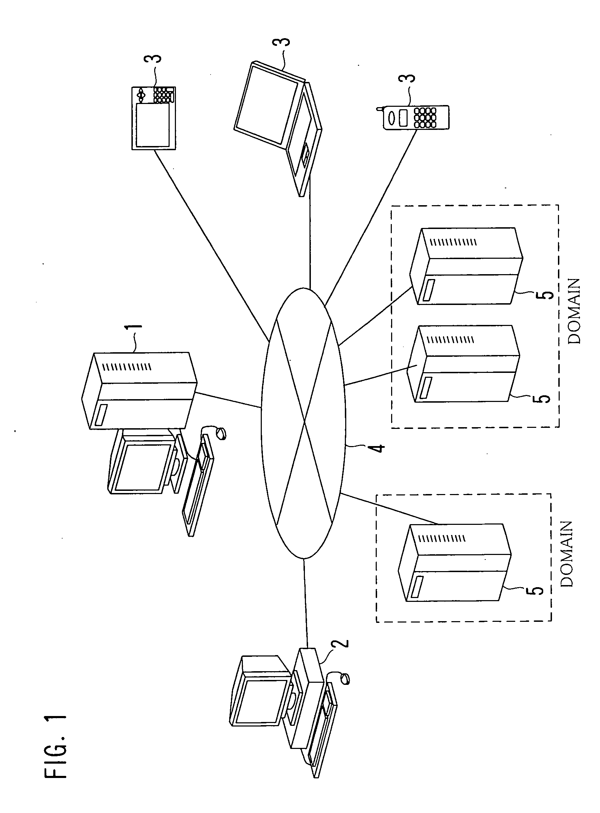

As shown in Fig. 1, the electronic mail server 1 according to the present invention can be connected to terminal devices 2 and 3, a WWW server 5 and other devices via a communication line 4. The communication line 4 includes the Internet, a LAN, a private line or a public line, for example.

An electronic mail program for making, sending and receiving electronic mail, a WWW browser for reading Web pages and other programs are installed in the terminal device 3. A user of each terminal device 3 is given an electronic mail address. The user can use the electronic mail server 1 as a SMTP (Simple Mail Transfer Protocol) server and a POP (Post Office Protocol) server for sending and receiving electronic mail with other users. The terminal device 3 includes a personal computer, a workstation, a personal digital assistant (PDA) or a cellular phone.

The terminal device 2 is used by a delivering trader who sends direct mail by electronic mail at random. The direct mail includes advertisements of goods or services handled by the delivering trader and a URL of the delivering trader's Web site. Here, such electronic mail is referred to as "unsolicited bulk electronic mail" or "spam mail". The delivering trader knows electronic mail addresses of many users and designates these electronic mail addresses as destinations of electronic mail so as to send unsolicited bulk electronic mail.

An Internet service provider (ISP) or a company is given a domain having a domain name such as "xxxxx.ne.jp". One or more WWW servers 5 are disposed in the domain in accordance with the number of members, the number of access times or quantity of information to be delivered. By this structure, one or more Web sites (WWW sites) are provided to the domain.

For example, in a case of an ISP domain, a Web site is provided to each of the individual members or company members. Each of the Web sites is given a sub domain or a directory, and a site name is assigned to it for distinguishing it from other Web sites.

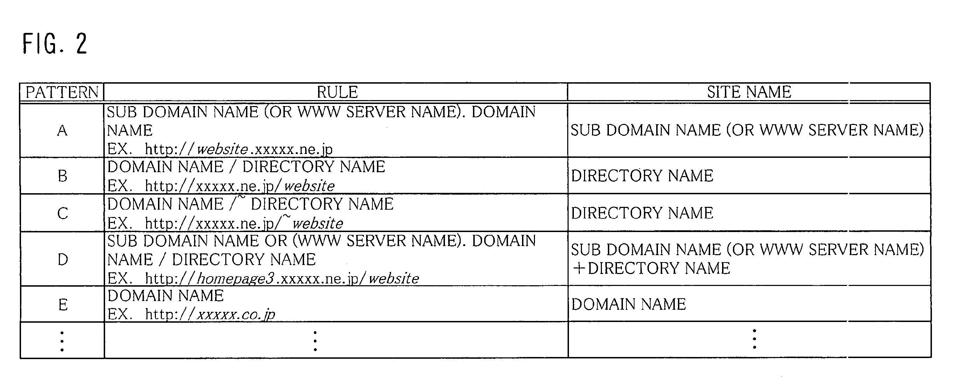

A way of deciding a uniform resource locator (URL), i.e., a way of assigning a site name of a Web site is different for each of the domains, and is roughly divided into patterns as shown in Fig. 2. For example, there are a pattern A of the site name that is a sub domain name preceding the domain name like "sub domain name.xxxxx.ne.jp", a pattern B of the site name that is a directory name following the domain name like "xxxxx.ne.jp/directory name ", a pattern C of the site name that is a directory name like "xxxxx.ne.jp/~directory name" using "~" (tilde) as a sign indicating the site name, and a pattern D of the site name that is a combination of a sub domain name and a directory name like "sub domain name.xxxxx.ne.jp/directory name". Note that a WWW server name may be used instead of the sub domain name in the patterns A and D.

Concerning a company domain, there may be two cases. In one case, a plurality of Web sites is provided for a head office, branch offices and subsidiaries. In the other case, only one Web site is provided for a corporate advertisement. In the former case, site names are assigned as patterns A-D shown in Fig. 2. In the latter case, the domain name is used as the site name (as shown in pattern E).

An owner of a Web site can provide a Web page in his or her Web site without restraint basically. The Web page is described in HTML (Hypertext Markup Language) or XML (Extensible Markup Language). The delivering trader of direct mail establishes a Web site as a company member of an ISP or obtains an original domain for establishing a Web site.

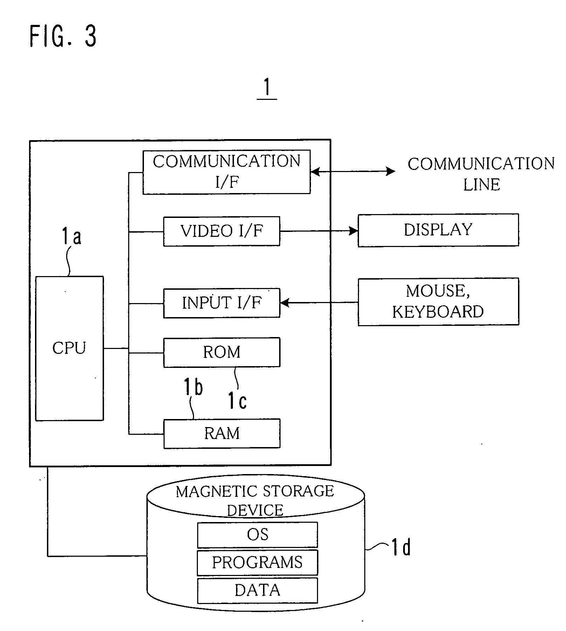

The electronic mail server 1 includes a CPU 1a, a RAM 1b, a ROM 1c, a magnetic storage device 1d and various interfaces as shown in Fig. 3. The magnetic storage device 1d stores an operating system (OS), an SMTP server program, a POP server program, a program for detecting unsolicited bulk electronic mail and various data. These programs and data are loaded into a RAM 1b as necessity, and the CPU 1a performs the programs.

Note that the electronic mail server 1 may be constituted by one server machine as shown in Fig. 1 or by a plurality of server machines in a distributed manner. For example, there may be a structure in which the SMTP server process and the POP server process are performed by different server machines.

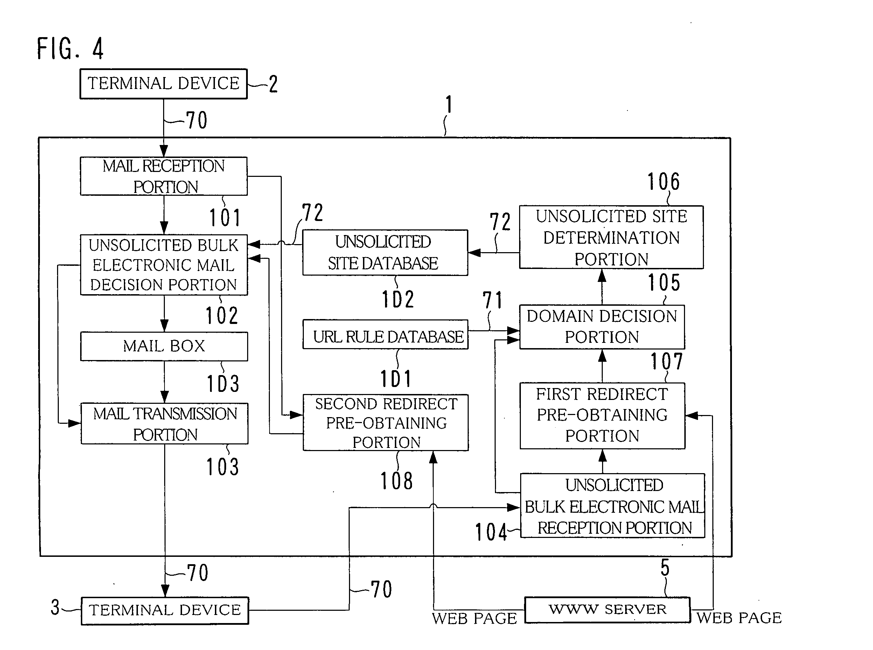

By this structure, the electronic mail server 1 realizes functions of a URL rule database 1D1, an unsolicited site database 1D2, a mail box 1D3, a mail reception portion 101, an unsolicited bulk electronic mail decision portion 102, a mail transmission portion 103, an unsolicited bulk electronic mail reception portion 104, a domain decision portion 105, an unsolicited site determination portion 106, a first redirect pre-obtaining portion 107 and a second redirect pre-obtaining portion 108 as shown in Fig. 4.

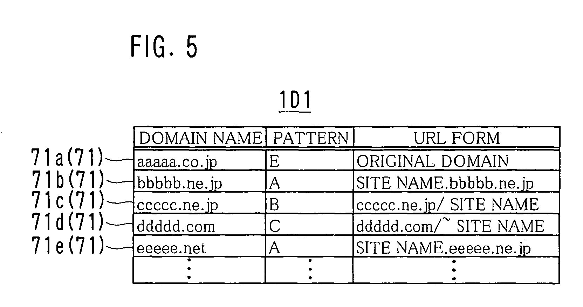

The URL rule database 1D1 stores URL rule information 71 (71a, 71b, ...) that indicates a regularity of how to assign a URL for each domain on the Internet as shown in Fig. 5. The mail box 1D3 is provided for each of users of the terminal devices 3 and stores electronic mail 70 sent from the terminal device on the Internet to the user.

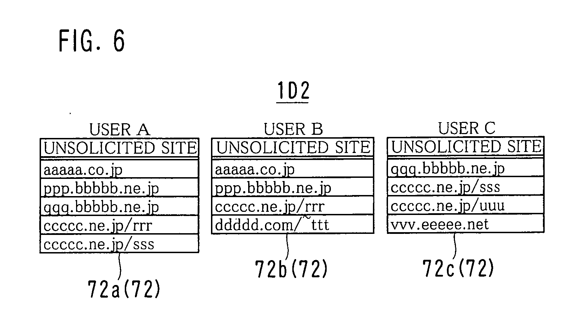

The unsolicited site database 1D2 stores unsolicited site information 72 (72a, 72b, ...) for each user indicating Web sites that deliver unnecessary information having no meaning to the user as shown in Fig. 6. Hereinafter, such a Web site may be referred to as an "unsolicited site". The registration of the Web site (unsolicited site) in the unsolicited site information 72 is performed in accordance with a URL indicated in the document of the unsolicited bulk electronic mail that the user received. The method for registering unsolicited sites will be described later.

A form of the URL of the unsolicited site in the unsolicited site information 72 is different in accordance with the above-mentioned pattern of the domain (see Fig. 5). For example, in the case of a Web site that is established in a domain that adopts the pattern A, it is described like "ppp.bbbbb.ne.jp" in a form of "site name (sub domain name) + domain name". In the case of a domain that adopts the pattern E, a whole domain forms one Web site. Therefore, a site name is described only by a domain name like "aaaaa.co.jp".

The mail reception portion 101 receives the electronic mail 70 that is sent to the user of the terminal device 3 among electronic mail sent from various terminal devices on the Internet. The electronic mail 70 may include unsolicited bulk electronic mail sent from the terminal device 2 of a delivering trader of direct mail.

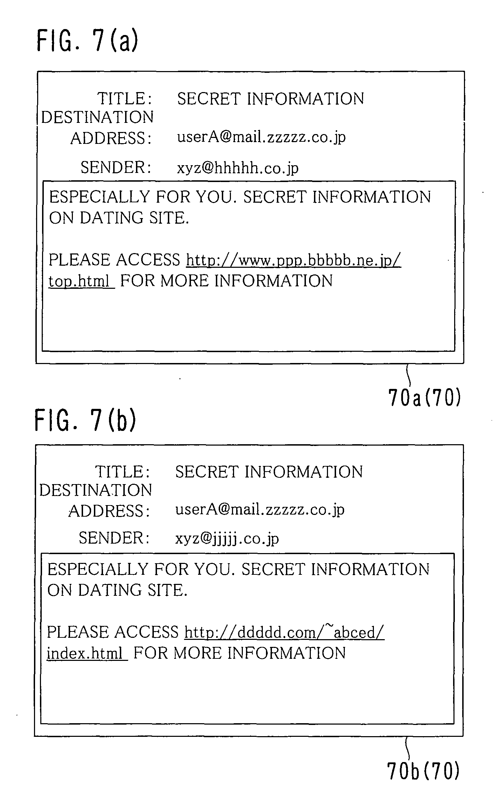

The unsolicited bulk electronic mail decision portion 102 decides whether the received electronic mail 70 is unsolicited bulk electronic mail or not. The decision is performed as described below. First, a URL included in a main body of the electronic mail 70 is extracted. For example, in the case of electronic mail 70a shown in Fig. 7(a), "http://www.ppp.bbbbb.ne.jp/top.html" is extracted.

Then, it is decided whether or not any of the unsolicited sites indicated in the unsolicited site information 72 of the user in the destination address of the electronic mail 70 is identical to a whole or a part of the extracted URL. In the case of the electronic mail 70a that is sent to the user A, "ppp.bbbbb.ne.jp" among five unsolicited sites indicated in the unsolicited site information 72a shown in Fig. 6 is identical to a part of the extracted URL. If they are identical, it is decided that the electronic mail 70a is unsolicited bulk electronic mail. On the contrary, if any unsolicited site indicated in the unsolicited site information 72a is not identical to a whole or a part of any URL in a main body like electronic mail 70b shown in Fig. 7(b), the electronic mail 70b is decided to be an ordinary electronic mail.

With reference to Fig. 4 again, the mail transmission portion 103 sends the electronic mail 70 that was decided to be an ordinary electronic mail to the terminal device 3 of the user of the destination address. If the terminal device 3 is a cellular phone, the electronic mail 70 is sent at the timing when it is decided to be an ordinary electronic mail. If the terminal device 3 is a personal computer, the electronic mail 70 is temporarily stored in the mail box 1D3 of the user. Then, it is sent at the timing when a request is made by the terminal device 3.

The electronic mail 70 that was decided to be unsolicited bulk electronic mail is erased without being sent to the user. However, it is possible not to erase the electronic mail 70 directly but to store it temporarily in the mail box 1D3 of the user with distinguished from ordinary electronic mail. Thus, the user can check contents of the unsolicited bulk electronic mail before erasing the same. In this case, the unsolicited bulk electronic mail is erased when the user issues an instruction or after a predetermined period of time has passed.

The electronic mail 70 that does not include any one of URLs of Web sites (unsolicited sites) registered in the unsolicited site information 72 may be sent to the terminal device 3 even if it is unsolicited bulk electronic mail. Therefore, the user can request the electronic mail server 1 not to send the unsolicited bulk electronic mail that introduces such an unsolicited site.

The user can operate the terminal device 3 to transfer the electronic mail 70 (unsolicited bulk electronic mail) received from the delivering trader to the electronic mail server 1. For example, the electronic mail 70b shown in Fig. 7(b) is sent.

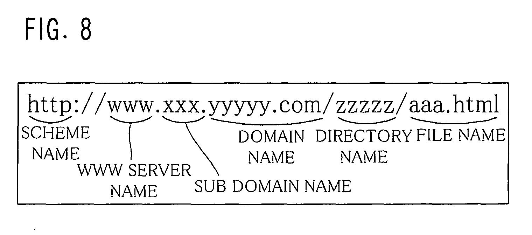

In the electronic mail server 1, after the unsolicited bulk electronic mail reception portion 104 receives the unsolicited bulk electronic mail from the terminal device 3, the domain decision portion 105 extracts a domain name from the URL in this unsolicited bulk electronic mail. Thus, the domain of the Web site (unsolicited site) is decided, which delivers the Web page indicated by the URL. In general, URLs are assigned by the rule as shown in Fig. 8. Therefore, in the case of the electronic mail 70b, the domain name "ddddd.com" is extracted (decided).

The unsolicited site determination portion 106 specifies the Web site indicated by the URL in the unsolicited bulk electronic mail in accordance with the URL rule information 71 that corresponds to the extracted domain. In the case of a URL that is in the electronic mail 70b, it is understood that the site name appears after the domain name from the URL rule information 71d of the domain "ddddd.com" shown in Fig. 5. Therefore, the Web site is specified to be "abcde".

The specified Web site is regarded as an unsolicited site for the user that sent the unsolicited bulk electronic mail and is added (registered) to the unsolicited site information 72 of the user. The Web site (unsolicited site) is registered so as to include a site name and a domain name in accordance with the rule indicated in the URL rule information 71 of the domain that belongs to the Web site. For example, in the case of the above-mentioned Web site "abcde", it is registered like "ddddd.com/~abcde" in accordance with the URL rule information 71d shown in Fig. 5. However, if only one Web site is formed in one domain, the domain name indicates the site name of the Web site. Therefore, the domain name is registered like "aaaaa.co.jp" in the unsolicited site information 72.

By the process described above, the user can refuse to receive unsolicited bulk electronic mail that introduces the URL of the unsolicited site registered in his or her unsolicited site information 72.

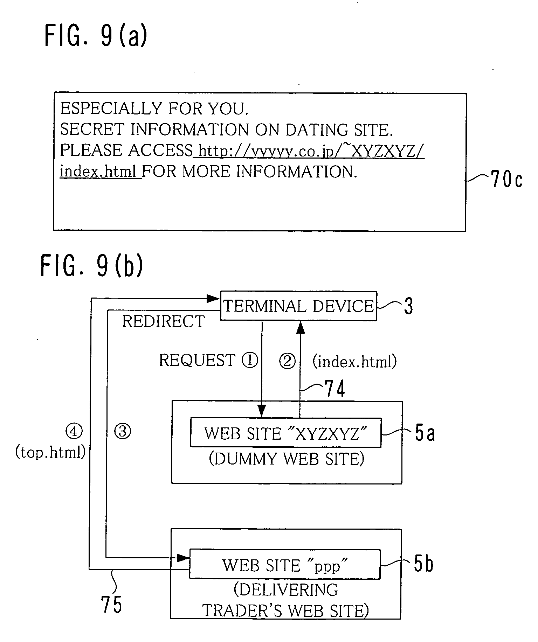

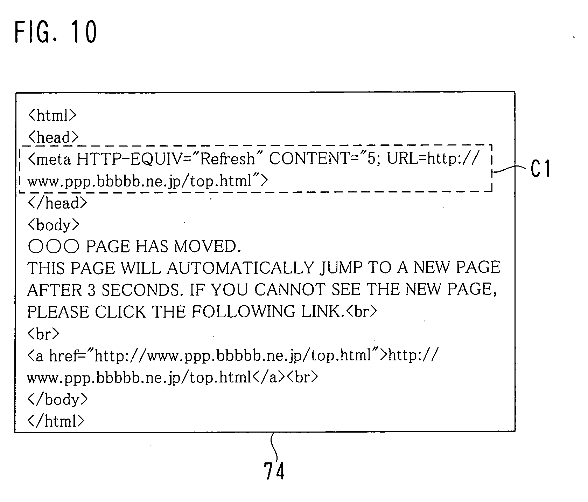

Figs. 9(a) and 9(b) show a mechanism of a redirect function of a Web page, and Fig. 10 shows an example of an HTML file including a redirect code. Using redirect function of HTML or XML, a delivering trader can make a user view a trader's Web site without describing the URL of the trader's Web site in the electronic mail 70 that is delivered to the user. This is possible by the mechanism illustrated in Figs. 9(a) and 9(b).

For example, the delivering trader delivers electronic mail 70c as shown in Fig. 9(a). When the URL described in the received electronic mail 70c is clicked, the terminal device 3 starts the WWW browser and downloads a Web page 74 (HTML file) from a dummy Web site 5a as shown in Fig. 9(b). This HTML file includes a tag C1 that is a redirect (jump) code as shown in Fig. 10. Thus, the terminal device 3 accesses (redirects to) the trader's real Web site 5b so as to download a Web page 75 in accordance with the tag C1.

The delivering trader makes new dummy Web sites like the Web site 5a one by one using a so-called free provider and delivers unsolicited bulk electronic mail to the user while changing the URL shown in Fig. 9(a). Accordingly, the user cannot refuse to receive the unsolicited bulk electronic mail that introduces indirectly the delivering trader's real Web site 5b by registering the Web site 5a in the unsolicited site information 72 shown in Fig. 6. Therefore, in order to counter these means, the electronic mail server 1 performs the following process.

The first redirect pre-obtaining portion 107 shown in Fig. 4 obtains a Web page in accordance with the URL described in the electronic mail 70 that was sent from the user's terminal device 3. Then, a redirect code is searched from the obtained Web page. If a redirect code is found, a URL of a destination of the redirect in the code is extracted. For example, if an HTML file shown in Fig. 10 is obtained as the Web page, a URL "http://www.ppp.bbbbb.ne.jp/top.html" that is indicated in the tag C1 is extracted.

The domain decision portion 105 decides a domain of the Web site that delivers the Web page indicated by the extracted URL. The unsolicited site determination portion 106 specifies the site name of this Web site. By these processes, this Web site is regarded as an unsolicited site and is registered in the unsolicited site information 72 of the user who sent the unsolicited bulk electronic mail.

On the other hand, the second redirect pre-obtaining portion 108 obtains a Web page designated by the URL in a main body of the electronic mail 70 sent from the delivering trader. The unsolicited bulk electronic mail decision portion 102 extracts a URL of the destination of redirect from a redirect code described in the obtained Web page (for example the tag C1 shown in Fig. 10). Then, it decides whether the electronic mail 70 is unsolicited bulk electronic mail or not in accordance with the extracted URL and the unsolicited site information 72 of the user of the destination address. If the electronic mail 70 is decided not to be unsolicited bulk electronic mail, it is sent to the terminal device 3 of the user of the destination address. If the electronic mail 70 is decided to be unsolicited bulk electronic mail, it is erased or stored in the mail box 1D3 only for a predetermined period while distinguished from ordinary electronic mail.

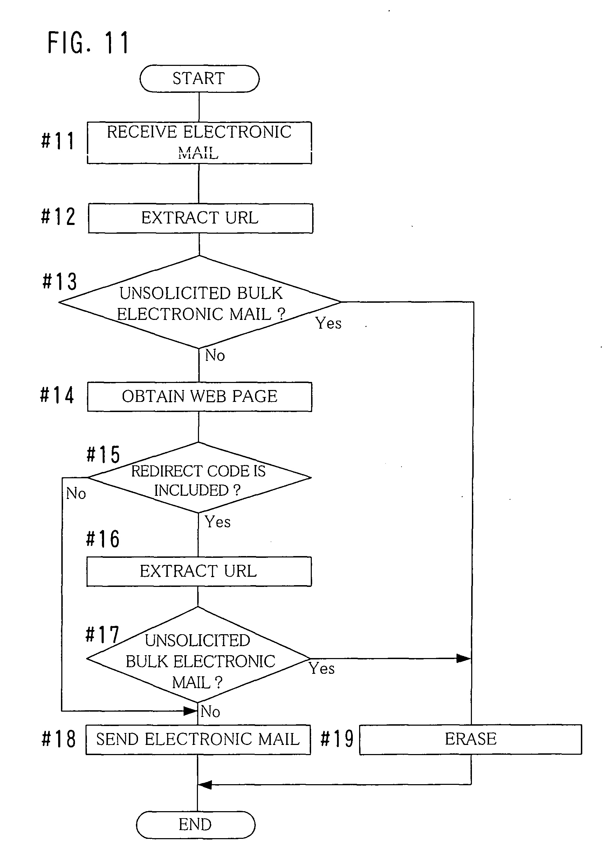

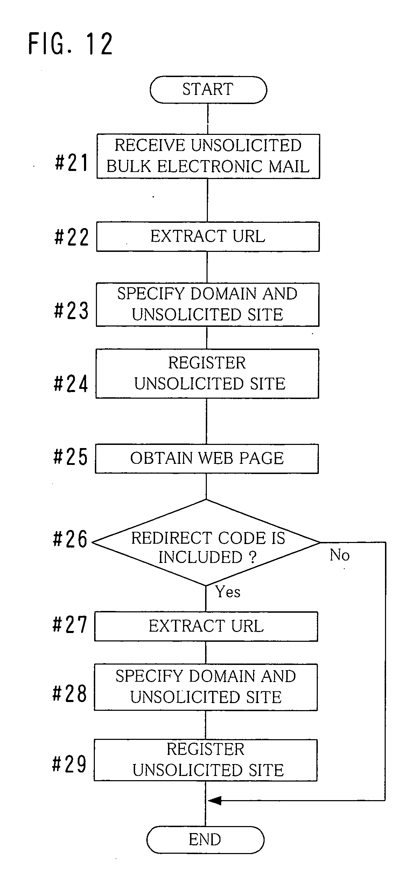

Next, a flow of the process performed by the electronic mail server 1 will be descried with reference to flowcharts. Fig. 11 is a flowchart for explaining a flow of process for relaying electronic mail, and Fig. 12 is a flowchart for explaining a flow of process for registering an unsolicited site.

In Fig. 11, when receiving the electronic mail 70 sent by the delivering trader to the user A for example (#11), a URL described in this electronic mail 70 is extracted (#12), and it is decided whether the electronic mail 70 is unsolicited bulk electronic mail or not in accordance with the extracted URL and the unsolicited site information 72a of the user A (#13). If the electronic mail 70 is decided to be unsolicited bulk electronic mail (Yes in #13), it is erased (#19). Otherwise, it is stored in the mail box 1D3 of the user A with distinguished from ordinary electronic mail to be erased after a predetermined period.

If the electronic mail 70 is decided not to be unsolicited bulk electronic mail (No in #13), it is sent to the terminal device 3 of the user A (#18). However, there is a possibility that the electronic mail 70 is unsolicited bulk electronic mail that introduces the Web site of the delivering trader (the Web site 5b) indirectly by means shown in Fig. 9(b). Therefore, the following process may be performed before Step #18.

A Web page designated by the URL extracted in Step #12 is obtained (#14), and it is decided whether or not a redirect (jump) code to other Web page is included in this Web page (#15).

If such a code is not included, the electronic mail 70 is sent to the terminal device 3 of the user A (#18). If the code is included, a URL of a destination of the redirect (jump) is extracted from the code (#16). Then, similarly to Step #13, it is decided whether or not the electronic mail 70 is unsolicited bulk electronic mail (#17). In accordance with a result of the decision, the electronic mail 70 is erased (#19) or is sent to the terminal device 3 of the user A (#18).

When registering a Web page (Web site) in the electronic mail 70 received by the user as an unsolicited site, a process is performed in the procedure shown in Fig. 12. When receiving the electronic mail 70b as shown in Fig. 7(b) from the user A (#21), for example, the electronic mail server 1 extracts the URL "http://ddddd.com/~abcde/index.html" described in the electronic mail 70b (#22) and specifies a Web site (unsolicited site) that delivers the Web page indicated by the URL and a domain to which the unsolicited site belongs (#23). Then, the unsolicited site "ddddd.com/-abcde" is registered in the unsolicited site information 72a of the user A in accordance with a domain name of the specified domain and a site name of the unsolicited site (#24).

Before or after or concurrently with the processes of Steps #23 and #24, a Web page designated by the extracted URL in Step #22 (such as an HTML file) is obtained (#25). Then, it is decided whether or not the obtained Web page includes a code of redirect (jump) to other Web page (#26). If such a code is included (Yes in #26), similarly to Steps #22-#24, the unsolicited site is registered in the unsolicited site information 72a of the user A in accordance with the URL indicating a destination of the redirect (#27-#29).

Note that there is a case where a plurality of dummy Web pages having redirect codes (the Web site 5a shown in Fig. 9(b), for example) from the URL indicated in the unsolicited bulk electronic mail until the final unsolicited site (the Web site 5b shown in Fig. 9(b), for example). In order to support this case, the process of Steps #15-#17 shown in Fig. 11 or the process of Steps #27-#29 shown in Fig. 12 may be repeated until reaching a Web page without redirect (i.e., a final unsolicited site).

According to this embodiment, the user can refuse to receive electronic mail that the user thinks a spam regardless of the electronic mail address of the sender.

Though the unsolicited site information 72 is stored for each user as shown in Fig. 6 in this embodiment, it is possible to store common unsolicited site information 72 for all users. For example, Web sites which many users regard as unsolicited sites may be registered in the common unsolicited site information 72. Otherwise, Web sites that deliver information against public policy are registered in advance in the common unsolicited site information 72 by an administrator of the electronic mail server 1. It is possible to refuse to receive unsolicited bulk electronic mail effectively by deciding whether or not the electronic mail 70 is unsolicited bulk electronic mail in accordance with this common unsolicited site information 72 and the unsolicited site information 72 of the user. Especially, a user who is a beginner of using the electronic mail server 1 has a small number of unsolicited sites registered in his or her unsolicited site information 72. However, by using the common unsolicited site information 72, the user can obtain the effect of this service soon.

The structure of a whole or a part of the electronic mail server 1, the terminal devices 2 and 3, the structure of the databases including the URL rule database 1D1 and the unsolicited site database 1D2, the contents and the order of the process can be modified if necessary in accordance with the spirit of the present invention.

### INDUSTRIAL APPLICABILITY

As described above, the electronic mail server according to the present invention is useful in that it can eliminate wasteful time for checking unsolicited bulk electronic mail and provide an environment for efficient work by erasing electronic mail that includes a URL of a Web page registered in the unsolicited site database without sending it to the terminal device of the user. In addition, as it decides whether or not electronic mail is unsolicited bulk electronic mail regardless of the electronic mail address of the sender, the unsolicited bulk electronic mail can be erased even a false electronic mail address of the sender is indicated in the electronic mail.

## Claims

1. An electronic mail server for relaying electronic mail, comprising:
an unsolicited URL storage portion for storing a part or a whole of a URL of a Web site that delivers undesired information for a receiver of electronic mail;
a reception portion for receiving electronic mail sent from a terminal device of a sender;
a decision portion for deciding whether or not the received electronic mail contains a part or a whole of the URL stored in the unsolicited URL storage portion; and
a transmission portion for sending the received electronic mail to a terminal device of a destination address of the received electronic mail only when it is decided that the received electronic mail does not contain a part or a whole of the URL.

2. An electronic mail server for relaying electronic mail, comprising:
a URL rule storage portion for storing URL rule information that indicates a relationship between a domain name of a domain when determining a URL and a site name of a Web site that is provided to each domain;
a first reception portion for receiving unsolicited bulk electronic mail from a terminal device of a user, the electronic mail being unsolicited electronic mail to the user who received the electronic mail;
a domain extraction portion for extracting a domain name indicated in a URL contained in the received unsolicited bulk electronic mail;
a Web site specifying portion for specifying a Web site that delivers a Web page indicated in the URL contained in the received unsolicited bulk electronic mail by referring to the URL rule information based on the extracted domain name;
an unsolicited site storage portion for storing the extracted domain name and a site name of the specified Web site as unsolicited site information in connection with the user;
a second reception portion for receiving electronic mail sent from a terminal device of a sender;
an unsolicited bulk electronic mail decision portion for deciding whether or not the received electronic mail is unsolicited bulk electronic mail by deciding whether the URL contained in the received electronic mail contains a domain name and a site name indicated in the unsolicited site information of the user of the destination address of the received electronic mail; and
a transmission portion for sending the received electronic mail to a terminal device of a user of the destination address only when it is decided that the received electronic mail is not unsolicited bulk electronic mail.

3. The electronic mail server according to claim 2, further comprising a first Web page obtaining portion for obtaining a Web page indicated in a URL contained in the unsolicited bulk electronic mail received by the first reception portion, wherein
if the Web page obtained by the first Web page obtaining portion contains a code for jumping to other Web page automatically,
the domain extraction portion extracts a domain name of a domain in which the other Web page is provided,
the Web site specifying portion specifies a Web site that delivers the other Web page, and
the unsolicited site storage portion stores a domain name of a domain in which a Web site is provided for delivering the other Web page and a site name of the Web site as the unsolicited site information.

4. The electronic mail server according to claim 2 or 3, further comprising a second Web page obtaining portion for obtaining a Web page indicated in a URL contained in the electronic mail received by the second reception portion, wherein
if the Web page obtained by the second Web page obtaining portion contains a code for jumping to other Web page automatically, the unsolicited bulk electronic mail decision portion decides whether or not the electronic mail is unsolicited bulk electronic mail in accordance with a URL of the other Web page.

5. A method for relaying electronic mail in an electronic mail server, comprising the steps of:
storing a part or a whole of a URL of a Web site that delivers undesired information by electronic mail to a receiver;
receiving electronic mail sent from a terminal device of a sender;
deciding whether or not the received electronic mail contains a part or a whole of the stored URL; and
sending the received electronic mail to a terminal device of a destination address of the received electronic mail only when it is decided that the received electronic mail does not contain a part or a whole of the URL.

6. A computer program product for use in a computer for relaying electronic mail, the computer program product comprising:
means for receiving electronic mail sent from a terminal device of a sender,
means for deciding whether or not the electronic mail contains a part or a whole of a URL of a Web site that delivers information that is undesired for a receiver of electronic mail; and
sending the received electronic mail to a terminal device of the receiver of the electronic mail only when it is decided that the received electronic mail does not contain a part or a whole of the URL.
